(19) **Europäisches Patentamt / European Patent Office / Office européen des brevets**

(11) **EP 3 978 571 A1**

(12) **EUROPEAN PATENT APPLICATION**
published in accordance with Art. 153(4) EPC

(43) Date of publication:
**06.04.2022 Bulletin 2022/14**

(21) Application number: **20813022.9**

(22) Date of filing: **26.05.2020**

(51) International Patent Classification (IPC):
*C08L 101/00* [(2006.01)]    *C08K 3/04* [(2006.01)]
*C08K 3/08* [(2006.01)]    *C08K 3/22* [(2006.01)]
*C08L 1/02* [(2006.01)]    *C08L 23/04* [(2006.01)]
*C08L 97/02* [(2006.01)]    *H02G 9/04* [(2006.01)]

(52) Cooperative Patent Classification (CPC):
**C08K 3/04; C08K 3/08; C08K 3/22; C08L 1/02;
C08L 23/04; C08L 97/02; C08L 101/00; H02G 9/04**

(86) International application number:
**PCT/JP2020/020736**

(87) International publication number:
**WO 2020/241636 (03.12.2020 Gazette 2020/49)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.05.2019 JP 2019098910**

(71) Applicant: **Furukawa Electric Co., Ltd.**
**Tokyo 100-8322 (JP)**

(72) Inventors:
• **TAZUKE, Masami**
  **Tokyo 100-8322 (JP)**
• **SUZUKI, Toshihiro**
  **Tokyo 100-8322 (JP)**

• **HARA, Hidekazu**
  **Tokyo 100-8322 (JP)**
• **IKEUCHI, Masato**
  **Tokyo 100-8322 (JP)**
• **HIROISHI, Jirou**
  **Tokyo 100-8322 (JP)**
• **KIM, Jae Kyung**
  **Tokyo 100-8322 (JP)**
• **SAKATO, Jiro**
  **Tokyo 100-8322 (JP)**

(74) Representative: **Forstmeyer, Dietmar et al
BOETERS & LIECK
Oberanger 32
80331 München (DE)**

(54) **RESIN COMPOSITE MATERIAL AND MOLDED BODY**

(57) A resin composite material containing a cellulose fiber dispersed in a thermoplastic resin, and a formed body using the same.

EP 3 978 571 A1

**Description**

FIELD OF THE INVENTION

The present invention relates to a resin composite material and a formed body.

BACKGROUND OF THE INVENTION

In recent years, there have been increasing accidents in which electrical wires and/or cables are disconnected due to a fire or the like, and there has been a demand for a technique for more reliably protecting electrical wires and/or cables from a fire. As such a technique, for example, it is known to store electrical wires and/or cables in a concrete trough. However, the concrete trough is excellent in fire resistance, but is heavy and also inferior in processability such as cutting and drilling in the field. Therefore, recently, use of a resin trough has been studied instead of concrete.
Use of waste plastic as a raw material of the resin trough has been studied from the viewpoint of effective use of resources. For example, Patent Literature 1 describes that a resin composition using waste plastic containing polyethylene, polypropylene, polystyrene, or the like is formed to obtain a formed body such as a trough.

CITATION LIST

PATENT LITERATURE

Patent Literature 1: JP-A-2008-63558 ("JP-A" means an unexamined published Japanese patent application)

SUMMARY OF THE INVENTION

TECHNICAL PROBLEM

In order to reduce the weight of the resin trough, a material for forming the trough is required to have higher mechanical strength.
The present invention provides a resin composite material that is excellent in mechanical properties and suitable for a trough, and a formed body thereof.

SOLUTION TO PROBLEM

The above problems of the present invention have been solved by the following means.

[1] A resin composite material, containing a cellulose fiber dispersed in a thermoplastic resin.
[2] The resin composite material described in the above item [1], which is used as a material for forming a trough.
[3] The resin composite material described in the above item [1] or [2], wherein the thermoplastic resin contains a polyolefin resin.
[4] The resin composite material described in the above item [3], wherein the polyolefin resin contains a polyethylene resin.
[5] The resin composite material described in any one of the above items [1] to [4], wherein a content of the cellulose fiber in the resin composite material determined by the following measurement method is 1% by mass or more and less than 70% by mass:
<measurement method>
a sample of a cellulose fiber-dispersing resin composite material is subjected to a thermogravimetric analysis (TGA) under a nitrogen atmosphere at a heating rate of +10°C/min, and the content of the cellulose fiber is calculated by the following [Formula 1]:

$$[\text{Formula 1}]\ (\text{content of cellulose fiber [\% by mass]}) = (\text{amount of mass reduction of sample at 200 to 380°C [mg]}) \times 100/(\text{mass of sample before thermogravimetric analysis [mg]}).$$

[6] The resin composite material described in the above item [5], wherein the content of the cellulose fiber in the resin composite material is 3% by mass or more and less than 50% by mass.

[7] The resin composite material described in any one of the above items [1] to [6], wherein the cellulose fiber contains a cellulose fiber having a fiber length of 0.3 mm or more.

[8] The resin composite material described in any one of the above items [1] to [7], wherein at least a part of the cellulose fiber is contained as aggregates of cellulose fibers.

[9] The resin composite material described in the above item [8], wherein at least a part of the aggregates is an aggregate having an area of $2.0 \times 10^4$ to $1.0 \times 10^6$ $\mu m^2$ in a plan view.

[10] The resin composite material described in the above item [8] or [9], wherein at least a part of the aggregates is an aggregate having an area of $2.0 \times 10^4$ to $2.0 \times 10^5$ $\mu m^2$ in a plan view.

[11] The resin composite material for a trough described in any one of the above items [1] to [10], containing aluminum dispersed.

[12] The resin composite material described in any one of the above items [1] to [11], containing at least one kind of titanium oxide, carbon black, and a photostabilizer.

[13] The resin composite material described in any one of the above items [1] to [12], which has a linear expansion coefficient at 10 to 40°C of $1 \times 10^{-4}$/°C or less.

[14] A formed body, which is obtainable by forming the resin composite material described in any one of the above items [1] to [13].

[15] The formed body described in the above item [14], which is a trough.

[16] The trough described in the above item [15], which is used for storing an electrical wire and/or a cable.

[17] The trough described in the above item [15] or [16], which is a groove type trough, a lid that closes an opening of a groove type trough, or a combination of a groove type trough and a lid that closes an opening of the groove type trough.

## ADVANTAGEOUS EFFECTS OF INVENTION

The resin composite material of the present invention is excellent in mechanical properties and is suitable as a material for forming a trough. Further, the formed body of the present invention is excellent in mechanical properties, and can be suitably used as a trough as a desired shape.

## DESCRIPTION OF EMBODIMENTS

Preferable embodiments of the present invention will be described.

The resin composite material of the present invention (hereinafter, also simply referred to as "composite material of the present invention") is made of a composition containing a cellulose fiber dispersed in a thermoplastic resin, and is suitable as a material for forming a trough. That is, the resin composite material of the present invention can be suitably used as a resin composite material for a trough.

[Thermoplastic resin]

Examples of the thermoplastic resin constituting the composite material of the present invention include a polyolefin resin such as polyethylene resin and polypropylene resin; a thermoplastic resin such as polyvinyl chloride resin, acrylonitrile-butadiene-styrene copolymer resin (ABS resin), acrylonitrile-styrene copolymer resin (AS resin), polyamide resin (nylon), polyethylene terephthalate resin, polybutylene terephthalate resin, and polystyrene resin; and a thermoplastic biodegradable resin such as 3-hydroxybutyrate-co-3-hydroxyhexanoate polymer resin (PHBH), polybutylene succinate resin, and polylactic acid resin. As the thermoplastic resin constituting the composite material of the present invention, one or two or more types of these resins can be used. Among them, the resin of the composite material preferably contains a polyolefin resin, and 50% by mass or more (preferably 70% by mass or more) of the thermoplastic resin constituting the composite material is preferably a polyolefin resin.

The polyolefin resin is preferably a polyethylene resin or a polypropylene resin, or preferably a mixture of a polyethylene resin and a polypropylene resin (resin blend). Further, ethylene-based copolymers such as an ethylene-vinyl acetate copolymer, an ethylene-ethyl acrylate copolymer, an ethylene-methyl methacrylate copolymer, an ethylene-acrylic acid copolymer, an ethylene-methacrylic acid copolymer, an ethylene-glycidyl methacrylate copolymer, and an ethylene-propylene copolymer (copolymers containing ethylene as a constituent); and resins such as polybutene are preferable as the polyolefin resin used in the composite material of the present invention. One type of polyolefin resin may be used singly, or two or more types thereof may be used in combination. The thermoplastic resin constituting the composite material of the present invention is preferably a polyethylene resin and/or a polypropylene resin, and more preferably a polyethylene resin.

Examples of the above polyethylene include a low density polyethylene (LDPE) and a high density polyethylene (HDPE). The resin constituting the composite material of the present invention is preferably a polyolefin resin. This polyolefin is preferably a polyethylene, and particularly preferably a low density polyethylene.

The thermoplastic resin constituting the composite material of the present invention may contain a plurality of types of resins as described above. Further, for example, a polyolefin resin and polyethylene terephthalate and/or nylon may be used in combination. In this case, the total amount of the polyethylene terephthalate and/or nylon is preferably 10 parts by mass or less based on 100 parts by mass of the polyolefin resin.

The above low density polyethylene means a polyethylene having a density of 880 kg/m$^3$ or more and less than 940 kg/m$^3$. The above high density polyethylene means a polyethylene having a density larger than the density of the above low density polyethylene.

The low density polyethylene may be so-called "low density polyethylene" and "ultralow density polyethylene" each having long chain branching, or linear low density polyethylene (LLDPE) in which ethylene and a small amount of α-olefin monomer are copolymerized, or further may be "ethylene-α-olefin copolymer elastomer" involved in the above density range.

The content of the thermoplastic resin in the composite material of the present invention is preferably 30% by mass or more, preferably 40% by mass or more, and even more preferably 50% by mass or more. Further, the content of the thermoplastic resin in the composite material of the present invention is ordinarily less than 99% by mass, more preferably less than 95% by mass, even more preferably less than 90% by mass, and also preferably less than 85% by mass. The resin constituting the composite material of the present invention is preferably made of a thermoplastic resin.

Incidentally, when the total content of the cellulose fiber and thermoplastic resin in the composite material of the present invention is less than 100% by mass, the remainder can contain, for example, components described later as appropriate according to the purpose or raw materials to be used.

[Cellulose fiber]

The content of the cellulose fiber contained in the composite material of the present invention is preferably 1% by mass or more. Mechanical characteristics can be improved by adjusting the content of the cellulose fiber in the composite material to 1% by mass or more. From this point of view, the content of the cellulose fiber in the composite material is more preferably 3% by mass or more, even more preferably 5% by mass or more, and even more preferably 10% by mass or more. Also, in consideration of further improving the flexural strength, the content of the cellulose fiber in the composite material is preferably 15% by mass or more.

In the composite material of the present invention, the content of the cellulose fiber is preferably less than 70% by mass. A composite material in which the cellulose fiber is uniformly dispersed by melt-kneading can be easily obtained by adjusting the content of the cellulose fiber in the composite material to less than 70% by mass. From the viewpoint of further suppressing water absorbing properties, the content of the cellulose fiber in the composite material is preferably less than 50% by mass, also preferably less than 40% by mass, and also preferably less than 35% by mass.

In the composite material of the present invention, the content of the cellulose fiber in the composite material is preferably 3% by mass or more and less than 50% by mass, more preferably 5% by mass or more and less than 50% by mass, also preferably 10% by mass or more and less than 40% by mass, and may be 15% by mass or more and less than 35% by mass.

The content of the cellulose fiber contained in the composite material of the present invention (% by mass) is determined by employing a value obtained by a thermogravimetric analysis as follows.

<Method of determining content of cellulose fiber (cellulose effective mass ratio)>

A composite material sample (10 mg) which has been dried in advance under the atmosphere at 80°C for 1 hour is subjected to a thermogravimetric analysis (TGA) from 23°C to 400°C under a nitrogen atmosphere at a heating rate of +10°C/min. Then, the content of cellulose fiber (% by mass, also referred to as cellulose effective mass ratio) is calculated by the following [Formula 1].

[Formula 1] (content of cellulose fiber [% by mass]) = (amount of mass reduction of composite material sample at 200 to 380°C [mg]) × 100/(mass of composite material sample in dried state before thermogravimetric analysis [mg])

Incidentally, when the temperature is raised to 200 to 380°C under a nitrogen atmosphere at a heating rate of +10°C/min, almost all of the cellulose fiber is thermally decomposed and lost. In the present invention, the % by mass calculated by the above [Formula 1] is taken as the content of the cellulose fiber contained in the composite material. Incidentally, a part of the cellulose fiber is not lost and remains within this temperature range in some cases, but when the temperature exceeds this temperature range, the cellulose fiber content cannot be distinguished from thermolysis loss or remaining components in a case where resin components are lost or compounds degradable at high temperatures are present together, for example, and as a result, it becomes difficult to measure the cellulose fiber amount. Therefore, in the present invention, the % by mass calculated by [Formula 1] is used for determining the cellulose fiber amount. The relationship between the cellulose fiber amount and the mechanical characteristics of the composite material obtained in this way is highly relevant.

The cellulose fiber dispersed in the composite material preferably contains a cellulose fiber having a fiber length of 0.3 mm or more. Mechanical strength such as impact resistance characteristics can be further improved by containing the cellulose fiber having a fiber length of 0.3 mm or more. From this point of view, the composite material contains a cellulose fiber having a fiber length of preferably 0.5 mm or more, more preferably 0.8 mm or more, and even more preferably 1 mm or more.

In the composite material of the present invention, the length weighted average fiber length of the cellulose fiber is preferably 0.3 mm or more (300 $\mu$m or more). Mechanical strength such as impact resistance characteristics can be further improved by adjusting the length weighted average fiber length to 0.3 mm or more. From this point of view, the length weighted average fiber length of the cellulose fiber is more preferably 0.4 mm or more, and even more preferably 0.5 mm or more. The upper limit of the length weighted average fiber length is not particularly limited, but is preferably 1.3 mm or less. Here, the length weighted average fiber length is determined for a dissolution residue (insoluble component) of the composite material when the composite material is immersed in a solvent capable of dissolving resin components in accordance with Pulps-Determination of fibre length by automated optical analysis specified by ISO 16065 2001 (JIS P8226 2006). When the resin constituting the composite material is a polyolefin resin, the length weighted average fiber length can be determined for a dissolution residue (insoluble component) in hot xylene (130 to 150°C) by the above measurement method. The length weighted average fiber length is a value obtained by dividing the sum of the squares of the fiber lengths of respective measured fibers by the total of the fiber lengths of respective measured fibers. As the characteristics of this average, the influence of the fiber length of the fiber having a longer fiber length, and the influence of the probability density of the fiber having a longer fiber length than the number average fiber length are remarkable compared to the number average fiber length which is a simple average of the fiber lengths. For this reason, the length weighted average fiber length is more suitable for evaluating the influence of the composite material containing a fiber having a long fiber length contained in the composite material on the mechanical properties than the number average fiber length.

Further, the average fiber diameter of the cellulose fiber in the composite material is preferably 5 to 40 $\mu$m. The mechanical strength of the obtained formed body can be further enhanced by the cellulose fiber having the above fiber length and the above fiber diameter. Further, pretreatment of the cellulose material is eliminated, and a load on the treatment in preparation of the composite material described below can also be reduced by adjusting the average fiber diameter of the cellulose fiber to 5 $\mu$m or more. Moreover, even when the formed body has a thin portion, satisfactory formability can be obtained by adjusting the average fiber diameter of the cellulose fiber to 40 $\mu$ or less. The average fiber diameter of the cellulose fiber in the composite material is preferably 10 to 30 $\mu$m.

At least a part of the cellulose fiber contained in the composite material of the present invention is preferably contained as aggregates of cellulose fibers in the composite material.

At least a part of the aggregates is preferably an aggregate having an area of $2.0 \times 10^4$ to $1.0 \times 10^6$ $\mu$m$^2$ in a plan view. A composite material having excellent impact resistance characteristics, and the like compared to a composite material in the form of simply containing a cellulose fiber can be obtained by employing the form of containing such aggregates. From this point of view, in the composite material of the present invention, at least a part of aggregates of the cellulose fiber is preferably an aggregate having an area of $2.0 \times 10^4$ to $2.0 \times 10^5$ $\mu$m$^2$ in a plan view, more preferably an aggregate having an area of $3.0 \times 10^4$ to $1.3 \times 10^5$ $\mu$m$^2$ in a plan view, and even more preferably an aggregate having an area of $5.0 \times 10^4$ to $1.0 \times 10^5$ $\mu$m$^2$ in a plan view.

In the present invention, when the "area" of an aggregate is simply described, the size refers to the size of an individual aggregate. Further, in the present specification, the expression "area in a plan view" or simply "area" of the aggregate means an area when a composite material is viewed in a plan from one direction.

In the present invention, the aggregate of the cellulose fiber is usually an aggregate formed from entangled cellulose fibers, but, a component derived from a raw material may be mixed in a part of the aggregate depending on a raw material to be used. When aggregates are dispersed in the composite material, the aggregates are present scattered in the composite material, and thus are observed as a scattered material. When the content of the cellulose fiber in the composite material is large, overlapping cellulose fibers increase, and thus discrimination of aggregates of the cellulose fiber is not clear in some cases. In such a case, the aggregates of the cellulose fiber can be allowed to stand out by diluting the composite material with a resin of the same series (type) as a resin constituting the composite material, whereby the aggregates can be clearly observed. The composite material is ordinarily formed into a sheet form, and the aggregates of the cellulose fiber can be observed as a dark color portion of transmitted light. Further, when the resin portion of the composite material is a dark color due to influence of a colorant, coloring components and the like represented by, for example, carbon black, the aggregates of the cellulose fiber can be observed as a light color portion of reflected light.

More specifically, the area of the aggregate of the cellulose fiber contained in the composite material of the present invention can be determined by forming a composite material into a thin film sheet (for example, thickness: 0.1 mm), taking a microscopic image of this sheet with reflected light or transmitted light, and analyzing this image. When the cellulose fiber amount in the composite material is large, overlapping of cellulose fibers dispersed in the resin is remarkable as it is. Therefore, a case is assumed where it is not easy to observe the aggregates while discriminating between overlapping cellulose fibers and aggregates. Even in such a case, the area of the aggregate can be more reliably determined by mixing a composite material with a resin having compatibility with a resin constituting the composite material (preferably a resin of the same type as the resin constituting the composite material) and kneading them to dilute the composite material, then forming the diluted material into a thin film sheet (for example, thickness: 0.1 mm), observing this sheet with a microscope and taking a microscopic image of the sheet.

The above thin film sheet can be prepared by slicing or pressing the composite material. Incidentally, the presence of a large aggregate having an area of $1.0 \times 10^7$ $\mu m^2$ or more can be determined by observing the surface of the composite material without forming a thin film sheet or diluting a composite material.

The form of the aggregate of the cellulose fiber contained in the composite material of the present invention has various forms and cannot be uniquely specified, but any form may be used as long as cellulose fibers are aggregated. In at least a part of aggregates of the cellulose fiber, the major axis diameter is preferably $1.6 \times 10^2$ to $1.0 \times 10^3$ $\mu m$. The major axis diameter means the maximum diameter in a plan view shape observed in an individual aggregate. That is, the maximum distance from a given point to another point on the circumference of the aggregate in an image observed with a microscope as described above is defined as the major axis diameter. The impact resistance characteristics of the composite material can be further enhanced by a composite material in the form of containing such aggregates. From this point of view, at least a part of aggregates of the cellulose fiber in the composite material of the present invention is more preferably an aggregate having a major axis diameter of $1.6 \times 10^2$ to $5.0 \times 10^2$ $\mu m$, and even more preferably an aggregate having a major axis diameter of $2.0 \times 10^2$ to $4.0 \times 10^2$ $\mu m$.

When the composite material of the present invention contains aggregates of the cellulose fiber in the above specific range, the composite material of the present invention is more excellent in impact resistance characteristics. The reason for this is not clear, but it is presumed that, when at least a part of the cellulose fiber is present as an aggregate of the cellulose fiber having a specific size, a reinforcing action of the cellulose fiber on rapid deformation, an action of the aggregate in the cellulose fiber absorbing and mitigating impact, and the like work in combination, thus effectively improving impact strength.

The composite material of the present invention contains aggregates of a cellulose fiber having a specific range of area as described above, and the area of each aggregate of the cellulose fiber in the composite material is preferably less than $1.0 \times 10^7$ $\mu m^2$. Forming processability can be further enhanced by adjusting the area of the aggregate to less than $1.0 \times 10^7$ $\mu m^2$. From the viewpoint of forming processability, the area of the aggregate of the cellulose fiber contained in the composite material of the present invention is more preferably less than $3.0 \times 10^6$ $\mu m^2$. On the other hand, the aggregate having an area of $2.0 \times 10^4$ to $1.0 \times 10^6$ $\mu m^2$ is considered to contribute to improvement in impact resistance characteristics as described above and also provides an effect on improvement of flowability in a certain level.

In the aggregates of the cellulose fiber contained in the composite material of the present invention, the proportion of the sum of the areas of aggregates having an area of $3.0 \times 10^4$ to $1.3 \times 10^5$ $\mu m^2$ (sum of the areas of individual aggregates in a range of $3.0 \times 10^4$ to $1.3 \times 10^5$ $\mu m^2$) in the sum of the areas of aggregates having an area of $1.0 \times 10^3$ to $1.0 \times 10^6$ $\mu m^2$ (sum of the areas of individual aggregates in a range of $1.0 \times 10^3$ to $1.0 \times 10^6$ $\mu m^2$) is preferably 10 to 95%. Impact resistance characteristics can be further enhanced, and the balance between impact resistance characteristics and flowability can also be further improved by adjusting this proportion to 10% or more. From this point of view, the above proportion is more preferably 14% or more, and even more preferably 18% or more. Note that it is technically difficult to enhance the above proportion to a higher level. In consideration of this respect, the above proportion is actually 90% or less, and ordinarily 80% or less. The proportion is also preferably 10 to 60%, also preferably 14 to 40%, and also preferably 18 to 30%.

In the observation of the aggregates of the cellulose fiber, as described above, the aggregates are easy to be observed in some cases by, for example, diluting the composite material such that the concentration of the cellulose fiber is in a certain range. When the concentration of the cellulose fiber is adjusted to 3 to 7% by diluting the composite material, the proportion s1 of the sum of the areas of the aggregates having an area of $3.0 \times 10^4$ to $1.3 \times 10^5$ $\mu m^2$ in the observation area in the observation in a plan view is preferably 0.01 to 1.0%. In this case, s1 is more preferably 0.015 to 0.8%, even more preferably 0.015 to 0.7%, and also preferably 0.018 to 0.6%.

The sum of the areas of the aggregates in the observation area varies depending on dilution of the composite material. For example, in the actual observation, a value sr1 (5% converted value) determined by converting a proportion s1' of the sum of the areas of the aggregates having an area of 3.0 x 10$^4$ to 1.3 × 10$^5$ μm$^2$ in the observation area into the observation result of a sample (thin film sheet) obtained by diluting the composite material so that the content of the cellulose fiber is 5% can be calculated by the following formula.

$$sr1\ [\%] = s1'\ [\%] × 5\ [\%\ \text{by mass}]/(\text{content of sample cellulose fiber to be observed}\ [\%\ \text{by mass}])$$

The above sr1 is preferably 0.01 to 1.0%, more preferably 0.015 to 0.8%, even more preferably 0.015 to 0.7%, and also preferably 0.018 to 0.6%.

When the concentration of the cellulose fiber is adjusted to 3 to 7% by diluting the composite material, a proportion s2 of the sum of the areas of the aggregates having an area of 1.0 × 10$^3$ to 1.0 × 10$^6$ μm$^2$ in the observation area in the observation in a plan view is preferably 0.015 to 1.5%, more preferably 0.02 to 1.2%, even more preferably 0.02 to 1.0%, and also preferably 0.03 to 1.0%.

For example, in the actual observation, a value sr2 (5% converted value) determined by converting a proportion s2' of the sum of the areas of the aggregates having an area of 1.0 × 10$^3$ to 1.0 × 10$^6$ μm$^2$ in the observation area into the observation result of a sample (thin film sheet) obtained by diluting the composite material so that the content of the cellulose fiber is 5% can be calculated by the following formula.

$$sr2\ [\%] = s2'\ [\%] × 5\ [\%\ \text{by mass}]/(\text{content of sample cellulose fiber to be observed}\ [\%\ \text{by mass}])$$

The above sr2 is preferably 0.015 to 1.5%, more preferably 0.02 to 1.2%, even more preferably 0.02 to 1.0%, and also preferably 0.03 to 1.0%.

The composite material of the present invention is preferably in the form in which aluminum is dispersed in the resin, in addition to the cellulose fiber. When aluminum is dispersed, the content of the aluminum is preferably 1% by mass or more and 30% by mass or less in the composite material. The thermal conductivity, visual recognition properties, and light shielding properties of the composite material are improved by containing aluminum. Further, the processability of the composite material can be further enhanced by adjusting the content of the aluminum to a level within this range, so that lumps of aluminum are less likely to occur during processing of the composite material. This aluminum can be derived from an aluminum thin film layer or the like of polyethylene laminated paper as a raw material. In the aluminum thin film layer of the polyethylene laminated paper, aluminum is not melted during melt-kneading, but is gradually sheared and micronized by shear force during kneading.

When thermal conductivity, flame retardancy, and the like are considered in addition to the viewpoint of the processability, the content of the aluminum in the composite material of the present invention is preferably 5% by mass or more and 20% by mass or less.

The composite material of the present invention preferably contains an aluminum dispersoid having an X-Y maximum length of 0.005 mm or more. The proportion of the number of aluminum dispersoids having an X-Y maximum length of 1 mm or more in the number of aluminum dispersoids having an X-Y maximum length of 0.005 mm or more is preferably less than 1%. The processability of the composite material can be further enhanced by adjusting this proportion to a level less than 1%, and the lump of aluminum becomes harder to be formed during processing of the composite material.

The X-Y maximum length is determined by observing the surface of the composite material. In this observation surface, a longer length of an X-axis maximum length and an Y-axis maximum length is taken as the X-Y maximum length by randomly drawing a straight line in a specific direction (X-axis direction) relative to the aluminum dispersoid to measure the maximum distance (X-axis maximum length) between two intersection points where the straight line intersects with the outer circumference of the aluminum dispersoid, and drawing another straight line in a direction (Y-axis direction) perpendicular to the specific direction to measure the maximum distance (Y-axis maximum length) between two intersection points where the Y-axis direction line intersects with the outer circumference of the aluminum dispersoid. The X-Y maximum length can be determined using image analysis software as described in Examples described later.

In the aluminum dispersoid dispersed in the composite material of the present invention, the average of the X-Y maximum lengths of individual aluminum dispersoids is preferably 0.02 to 2 mm, and more preferably 0.04 to 1 mm. The average of the X-Y maximum length is taken as the average of the X-Y maximum lengths measured by using the image analysis software as described later.

The aluminum dispersoid preferably has a thin film structure such as a scale shape or a flake shape from the viewpoint of visibility and processability. The aluminum dispersoid also preferably has an irregular folded structure of a thin film structure from the viewpoint of processability.

In the composite material of the present invention, the linear expansion coefficient at 10 to 40°C is preferably $1 \times 10^{-4}$/°C or less. When the composite material of the present invention contains a cellulose fiber, a low linear expansion coefficient can be achieved although the composite material is made of a resin. When the composite material has such a low linear expansion coefficient, dimensional stability during forming is excellent, and stretch and contraction due to a temperature difference between day and night and seasons after laying is reduced. From this point of view, the linear expansion coefficient at 10 to 40°C is even more preferably $8 \times 10^{-5}$/°C or less. The linear expansion coefficient is determined in accordance with JIS K 7197.

In the composite material of the present invention, the moisture content is preferably less than 1% by mass. The moisture content is determined from the weight loss (% by mass) when 10 mg of composite material sample is subjected to a thermogravimetric analysis (TGA) from 23°C to 120°C at a heating rate of +10°C/min under a nitrogen atmosphere within 6 hours after production of the composite material.

The composite material of the present invention may contain an inorganic material as long as increase in weight is not a problem. Flexural modulus and flame retardancy may be improved by containing the inorganic material. Examples of the inorganic material include calcium carbonate, talc, clay, magnesium oxide, aluminum hydroxide, magnesium hydroxide, titanium oxide, and carbon black.

The composite material of the present invention may contain a flame retardant, an antioxidant, a stabilizer (photostabilizer, and the like), a weathering agent, a compatibilizer, an impact improver, a modifier, or the like according to the purpose.

Examples of the flame retardant include a phosphorus-based flame retardant, a halogen-based flame retardant, and metal hydroxide as described above. In order to improve the flame retardancy, the composite material may contain a resin such as an ethylene-based copolymer including an ethylene-vinyl acetate copolymer and an ethyl acrylate copolymer.

Examples of the phosphorus-based flame retardant include a compound containing a phosphorus atom in a molecule. Specific examples thereof include amorphous phosphorus; phosphorous oxide such as phosphorus trioxide, phosphorus tetroxide and phosphorus pentoxide; a phosphoric acid compound such as phosphoric acid, phosphorous acid, hypophosphoric acid, metaphosphoric acid, pyrophosphoric acid and polyphosphoric acid; ammonium phosphate such as monoammonium phosphate, diammonium phosphate and ammonium polyphosphate; melamine phosphate such as melamine monophosphate, melamine diphosphate and melamine polyphosphate; metal phosphate including lithium phosphate, sodium phosphate, potassium phosphate, calcium phosphate and magnesium phosphate; aliphatic phosphoric acid esters such as trimethyl phosphate and triethyl phosphate; and aromatic phosphoric acid esters such as triphenyl phosphate and tricresyl phosphate.

Examples of the halogen-based flame retardant include an aliphatic hydrocarbon bromide such as hexabromocyclododecane; an aromatic compound bromide such as hexabromobenzene, ethylenebispentabromodiphenyl, and 2,3-dibromopropylpentabromo phenyl ether; a tetrabromobisphenol A brominated bisphenol derivative oligomer; a bromide aromatic compound; chlorinated paraffin; chlorinated naphthalene; perchloropentadecane; tetrachlorophthalic anhydride; a chlorinated aromatic compound; a chlorinated alicyclic compound; and a bromide-based flame retardant such as hexabromophenyl ether and decabromodiphenyl ether.

Examples of the metal hydroxide include magnesium hydroxide and aluminum hydroxide which are also described as the above inorganic material. Moreover, a material obtained by applying surface treatment to the metal hydroxide described above can also be used.

Examples of the antioxidant, the stabilizer, and the weathering agent include a hindered phenol-based antioxidant such as tetrakis[methylene-3-(3,5-dit-butyl-4-hydroxyphenyl)propionate]methane, 1,3,5-trimethyl-2,4,6-tris(3,5-di-t-butyl-4-hydroxybenzyl)benzene, and 4,4'-thiobis(3-methyl-6-t-butylphenol). Examples of the photostabilizer include a hindered amine-based compound such as polymethylpropyl 3-oxy-[4(2,2,6,6 tetramethyl)piperidinyl]siloxane, polyester of 4-hydroxy-2,2,6,6-tetramethyl-1-piperidineethanol and succinic acid, and poly[{6-(1,1,3,3-tetramethylbutyl)amino-1,3,5-triazine-2,4-diyl}{(2,2,6,6-tetramethyl-4-piperidyl)imino}hexamethylene{(2,2,6,6-tetramethyl-4-piperidyl)imino}]. The content of the antioxidant, the stabilizer or the weathering agent is preferably 0.001 part by mass to 0.3 part by mass, each based on 100 parts by mass of the composite material, and is appropriately adjusted depending on the type of the antioxidant, the stabilizer or the weathering agent and an application of the composite material.

The composite material of the present invention can contain an oil component or various types of additives for improving processability. Examples thereof include paraffin, modified polyethylene wax, stearate, hydroxy stearate, a vinylidene fluoride-based copolymer such as a vinylidene fluoride-hexafluoropropylene copolymer, and organic modified siloxane.

Examples of the compatibilizer, the impact improver and the modifier include a styrene-based elastomer such as polystyrene-poly(ethylene-ethylene/propylene) block-polystyrene, polystyrene-poly(ethylene/butylene) block-polystyrene, polystyrene-poly(ethylene/propylene) block-polystyrene and an olefin crystalline ethylene-butylene-olefin crystalline block polymer; acid-modified polyolefin such as maleic acid-modified polyethylene and maleic acid-modified polypropylene. From the viewpoint of enhancing tensile strength and flexural strength, maleic acid-modified polyethylene can be preferably used.

The composite material of the present invention preferably contains at least one kind of titanium oxide, carbon black, and a photostabilizer. This can prevent deterioration in long-term outdoor use, and also enhances formability.

The composite material of the present invention can also contain various types of pigments and dyes. The composite material of the present invention can contain a metallic luster colorant. The composite material of the present invention can also contain an electrical conductivity-imparting component such as electrically conductive carbon black. Further, the composite material of the present invention can also contain a thermal conductivity-imparting component.

When the composite material of the present invention contains titanium oxide, the content of the titanium oxide is preferably 0.5 to 20 parts by mass, and more preferably 1 to 10 parts by mass, based on 100 parts by mass of the total content of the thermoplastic resin and the cellulose fiber. By blending a predetermined amount of titanium oxide, weather resistance can be improved, and a color tone can be adjusted.

The composite material of the present invention may be crosslinked. Examples of the crosslinking agent include organic peroxides, and specific examples include dicumyl peroxide. The composite material of the present invention may be in a crosslinked form by a silane crosslinking method.

The shape of the composite material of the present invention is not particularly limited. For example, the composite material of the present invention may be formed into a pellet form, or may also be formed into a desired shape. When the composite material of the present invention is in the form of a pellet, this pellet is suitable as a material for forming a formed article (resin product) such as a trough.

At least a part of the thermoplastic resin and the cellulose fiber constituting the composite material of the present invention can be derived from a recycled material. At least a part of the aluminum, polypropylene, polyethylene terephthalate, and nylon, which can be contained in the composite material of the present invention, can also be derived from a recycled material. The production cost of the composite material can be suppressed by utilizing the recycled material.

Examples of the recycled material include polyethylene laminated paper having paper and a polyethylene thin film layer, polyethylene laminated paper having paper, a polyethylene thin film layer, and an aluminum thin film layer, and a beverage pack and/or food pack made of these processed papers. Further, the recycled material may be waste paper, regenerated resin, or the like, specifically, waste paper of office paper, cardboard, and the like, paper powder, regenerated pulp, and paper sludge. Examples of the recycled material used as the polyolefin resin include a recovered material and a production loss material of a packaging container, a packaging film, a laminated film, and the like. Use of a plurality of types of these materials is possible. More preferably, a polyethylene thin film piece to which a cellulose fiber is adhered, obtained by processing the above laminated paper and/or beverage/food pack by a pulper to strip off and remove a paper portion (hereinafter, referred to as "cellulose fiber-adhering polyethylene thin film piece") is used as the recycled material. When the laminated paper and/or the beverage/food pack have an aluminum thin film layer, aluminum is also adhered to the cellulose fiber-adhering polyethylene thin film piece.

When such a recycled material is used as a raw material, the composite material of the present invention can also be obtained by, for example, melt-kneading described later.

[Preparation of resin composite material]

Subsequently, preferred embodiments of preparation of the composite material of the present invention will be described below. The composite material of the present invention is not limited to those obtained by the following method as long as the definitions of the present invention are satisfied.

A composite material containing a cellulose fiber dispersed in a thermoplastic resin can be obtained by melt-kneading a thermoplastic resin, and a cellulose fiber or other supply sources thereof (hereinafter, also collectively referred to as "cellulose fiber material" or "cellulose material" which will be described in detail later). Further, the composite material of the present invention containing cellulose aggregates with a specific size can be obtained by adjusting the kneading condition at the time of melt-kneading or adding an additive during kneading. A composite material containing cellulose aggregates with a specific size can be obtained by, for example, adding a polar solvent having high affinity with a cellulose fiber and melt-kneading them upon kneading a thermoplastic resin and a cellulose material. The polar solvent is preferably a solvent having relatively low affinity with a resin constituting the composite material. The polar solvent added during melt-kneading is preferably water.

The amount and size of the aggregate of the cellulose fiber in the obtained composite material can be adjusted by controlling the addition amount of the polar solvent, addition timing, kneading time, kneading speed, temperature, and the like at the time of melt-kneading. When the addition amount of water is large for example, the amount of the aggregate tends to be large and the size of the aggregate tends to be large. In particular, the kneading time in the presence of the polar solvent significantly affects controlling of the amount and size of the aggregate. It is preferable to perform melt-kneading in the presence of water for a long period of time in order to form the aggregate defined in the present invention. The kneading time in the presence of water can be sufficiently secured by, for example, adding water in several times in the melt-kneading over a long period of time. The amount and size of the aggregate of the cellulose fiber formed by this melt-kneading tend not to significantly vary in the melt-kneading in the absence of water. Accordingly, the melt-kneading condition in the presence of water becomes important, and the obtained composite material can maintain the aggregated state of the cellulose in subsequent processing, blending (diluting) with a resin, and the like, and thus can exhibit desired characteristics such as impact strength.

In the melt-kneading, the polar solvent is preferably added in a plurality of times. For example, it is preferable that the thermoplastic resin and the cellulose fiber are first melt-kneaded in the presence of a part of the total amount of the polar solvent, and then further melt-kneaded in the presence of the remainder of the total amount of the polar solvent.

Ordinary kneading apparatuses such as a kneader and a twin-screw extruder can be applied to the melt-kneading.

Here, "melt-kneading" means kneading at a temperature at which the resin (thermoplastic resin) in the raw material is melted. The melt-kneading is preferably performed at a temperature and treatment time at which the cellulose fiber is not deteriorated. The expression "the cellulose fiber is not deteriorated" means that the cellulose fiber does not cause significant discoloration, burning or carbonization.

The temperature in the melt-kneading (temperature of the melt-knead material) is, for example, preferably 110 to 280°C, and more preferably 130 to 220°C when a case of using a polyethylene resin is taken as an example, from the viewpoint of performing kneading sufficiently while suppressing deterioration of the cellulose fiber. When the resin of the composite material contains a polyolefin resin as a main component and further contains polyethylene terephthalate and/or nylon, melt-kneading can also be performed at the same temperature as the temperature described above.

In the melt-kneading, the used amount of the cellulose material is preferably adjusted so that the content of the cellulose fiber in the obtained composite material is within the above preferable range.

Examples of the cellulose material include a material mainly containing cellulose, and more specifically, examples thereof include pulp, paper, waste paper, paper powder, regenerated pulp, paper sludge, laminated paper, and broken paper of laminated paper.

The paper and waste paper may contain a cellulose fiber, a filler (kaolin or talc, for example) generally contained in order to enhance the whiteness of the paper, a sizing agent, and the like. Here, the sizing agent is an additive to be added for the purpose of suppressing permeability of liquid such as ink into the paper, preventing set-off or blurring, and providing the paper with a certain degree of water proofness. As a main agent, rosin soap, alkylketene dimer, alkenyl succinic anhydride, polyvinyl alcohol, and the like are used. As a surface sizing agent, oxidized starch, a styrene-acryl copolymer, a styrene-methacryl copolymer and the like are used. For example, various types of additives which are contained in paper or waste paper, an ink component, lignin, and the like may be contained.

The laminated paper may contain a polyethylene resin, a cellulose fiber, a filler (kaolin or talc, for example) generally contained in order to enhance the whiteness of the paper, a sizing agent, and the like. Here, the sizing agent is an additive to be added for the purpose of suppressing permeability of liquid such as ink into the paper, preventing set-off or blurring, and providing the paper with a certain degree of water proofness. As a main agent, rosin soap, alkylketene dimer, alkenyl succinic anhydride, polyvinyl alcohol, and the like are used. As a surface sizing agent, oxidized starch, a styrene-acryl copolymer, a styrene-methacryl copolymer and the like are used. For example, various types of additives which are contained in the laminated paper as the raw material, an ink component, and the like may be contained.

The pulp includes mechanical pulps and chemical pulps, and the mechanical pulp contains lignin and contaminants. Meanwhile, the chemical pulp hardly contains lignin, but contains contaminants other than lignin in some cases. For the cellulose amount in the cellulose material such as pulp, paper, waste paper, paper powder, regenerated pulp, paper sludge, laminated paper, and broken paper of the laminated paper that can be used in the present invention, there is a difference in appearance due to, for example, influence of contaminants and additives contained therein, or influence of undegraded components of cellulose which is out of the measurement temperature range in the thermogravimetric analysis of the cellulose amount. In the present invention, the cellulose fiber amount determined by [Formula 1] in the thermogravimetric analysis is used as the cellulose fiber amount.

A formed body can be obtained by forming the composite material of the present invention into a desired shape.

[Trough]

The trough of the present invention is obtained by forming the composite material of the present invention. This formation can be performed by injection molding or press molding of an extrudate. The shape of the trough is not particularly limited, and the trough can have a shape capable of storing electrical wires and cables.

For example, a part of a cylindrical wall can be removed. As an example, a groove type trough can be obtained by forming a trough so as to have a cross section of a U shape in katakana, or forming a trough so as to have a cross section of a C shape or a U shape in alphabets. It is also possible to obtain a lid of the trough by forming the composite material into a shape of a lid that closes a removed wall portion (groove type opening) of a trough having a shape excluding a part of the cylindrical wall. In the present invention, the term "trough" includes not only a groove type trough, but also a lid that closes an opening of the groove type trough and a combination of the groove type trough (main body) and the lid.

The trough of the present invention is suitable for civil engineering, building materials, automobiles or electrical wire protection, particularly for laying electrical wires and/or cables, and more particularly for laying electrical wires and/or cables for railways.

EXAMPLES

The present invention will be described in more detail based on examples given below, but the invention is not meant to be limited by these. A measurement method and an evaluation method for each indicator in the present invention are as follows.

[Cellulose fiber content in composite material]

A composite material sample (10 mg) which has been dried in advance under the atmosphere at 80°C for 1 hour is subjected to a thermogravimetric analysis (TGA) from 23°C to 400°C under a nitrogen atmosphere at a heating rate of +10°C/min. Then, the content of cellulose fiber (% by mass) was calculated by the following [Formula 1]. The same five composite material samples were prepared, and the thermogravimetric analysis was performed for each of the composite material samples in the same manner as described above. The average value of five calculated values of the contents (% by mass) of the cellulose fibers was obtained, and the average value was taken as the content (% by mass) of the cellulose fiber.

$$[\text{Formula 1}]\ (\text{content of cellulose fiber [\% by mass]}) = (\text{amount of mass reduction of composite material sample at 200 to 380°C [mg]}) \times 100/(\text{mass of composite material sample in dried state before thermogravimetric analysis [mg]})$$

[Aggregate]

<Evaluation-1 of aggregate of cellulose fiber>

A composite material was diluted with a resin to prepare a sheet having a thickness of 0.1 mm. A microscopic image of this sheet was taken with transmitted light, and the size (area) and distribution of a dark color portion (aggregates of the cellulose fiber) were analyzed. The above dilution was performed by kneading a composite material and a resin by a roll. Incidentally, press processing (press pressure: 4.2 MPa) was used for preparing the sheet, and a stereoscopic microscope and analysis software (image analysis software Pixs2000 Pro, manufactured by Inotec) were used for taking the microscopic image and analysis. The above dilution of the composite material with the resin was performed in a manner that the concentration of the cellulose fiber after dilution was in a range of 3 to 7% by mass.

The area in plan view of the aggregate of the cellulose fiber thus analyzed was evaluated based on the following evaluation criteria.

"Presence of aggregate 1":

A case where an aggregate having an area of $2.0 \times 10^4$ to $1.0 \times 10^6\ \mu m^2$ is present is evaluated as "Present" and a case where such an aggregate is not present is evaluated as "None".

"Presence of aggregate 1b":

A case where an aggregate having an area of $2.0 \times 10^4$ to $2.0 \times 10^5\ \mu m^2$ is present is evaluated as "Present" and a case where such an aggregate is not present is evaluated as "None".

"Presence of aggregate 1c":

A case where an aggregate having an area of $3.0 \times 10^4$ to $1.3 \times 10^5\ \mu m^2$ is present is evaluated as "Present" and a case where such an aggregate is not present is evaluated as "None".

"Presence of aggregate 1d":

A case where an aggregate having an area of $5.0 \times 10^4$ to $1.0 \times 10^5$ $\mu$m$^2$ is present is evaluated as "Present" and a case where such an aggregate is not present is evaluated as "None".

<Evaluation-2 of aggregate of cellulose fiber>

The presence of the aggregate having an area of $1.0 \times 10^7$ $\mu$m$^2$ or more was determined by preparing a test piece (thickness: 4 mm, width: 10 mm, and length: 80 mm) by injection molding, and then observing both surfaces of each of the obtained 10 test pieces.

"Presence of aggregate 2":

A case where an aggregate having an area of $1.0 \times 10^7$ $\mu$m$^2$ or more is present is evaluated as "Present" and a case where such an aggregate is not present is evaluated as "None".

[Impact resistance (impact strength)]

A test piece (thickness: 4 mm, width: 10 mm, and length: 80 mm) was prepared using a composite material by injection molding, and Izod impact strength was measured using a notched test piece in accordance with JIS K7110. The unit of the impact resistance is "kJ/m2".

[Tensile strength]

A test piece was prepared using a composite material by injection molding, and tensile strength was measured for a No. 2 test piece in accordance with JIS K7113. The unit of the tensile strength is "MPa".

[Flexural strength and flexural modulus]

A test piece (thickness: 4 mm, width: 10 mm, and length: 80 mm) was prepared using a composite material by injection molding, a load was applied to the test piece with a span of 64 mm, a curvature radius of 5 mm at a supporting point and an action point, and a test speed of 2 mm/min, and flexural strength and flexural modulus were calculated in accordance with JIS K7171. The units of the flexural strength and the flexural modulus are "MPa".
Here, the flexural modulus Ef can be determined by determining flexural stress $\sigma$f1 measured at a deflection amount in strain 0.0005 ($\varepsilon$f1) and flexural stress $\sigma$f2 measured at a deflection amount in strain 0.0025 ($\varepsilon$f2), and dividing a difference therebetween by a difference between respective amounts of strain corresponding thereto, namely, according to the following formula: $Ef = (\sigma f2 - \sigma f1)/(\varepsilon f2 - \varepsilon f1)$.
In this case, the deflection amount S for determining the flexural stress can be determined according to the following formula:

$$S = (\varepsilon \cdot L^2)/(6 \cdot h)$$

S is deflection,
$\varepsilon$ is flexural strain,
L is span, and
h is thickness.

[Cellulose fiber length]

First, 0.1 to 1 g was cut out from a formed sheet of the composite material, and this was taken as a sample, and this sample was wrapped with a 400-mesh stainless steel mesh, and immersed into 100 mL of xylene at 138°C for 24 hours. Next, the sample was pulled up therefrom, and then the sample was dried in vacuum at 80°C for 24 hours. Then, 0.1 g of the dry sample was sufficiently dispersed into 50 mL of ethanol and added dropwise to a petri dish, and a part in a range of 15 mm $\times$ 12 mm was observed with a microscope. A case where a cellulose fiber having a fiber length of 0.3 mm or more is observed and a cellulose fiber having a fiber length of 1 mm or more is not observed was evaluated as (○); a case where a cellulose fiber having a fiber length of 0.3 mm or more and a cellulose fiber having a fiber length of 1 mm or more are observed was evaluated as (◎); and other cases were evaluated as (x).

[Length weighted average fiber length]

The length weighted average fiber length was measured for a hot xylene dissolution residue (insoluble component) of the composite material in accordance with Pulps-Determination of fibre length by automated optical analysis specified by ISO 16065 2001 (JIS P8226 2006). Specifically, 0.1 to 1 g was cut out from a formed sheet of the composite material and this was taken as a sample, and this sample was wrapped with a 400-mesh stainless steel mesh, and immersed into 100 mL of hot xylene at 138°C for 24 hours. Next, the sample was pulled up therefrom, and then the sample was dried in vacuum at 80°C for 24 hours, thus obtaining a hot xylene dissolution residue (insoluble component) of the composite material. The length weighted average fiber length for this hot xylene dissolution residue (insoluble component) of this composite material was determined by using MORFI COMPACT, manufactured by TECHPAP in accordance with Pulps-Determination of fiber length by automated optical analysis.

[Preparation Example 1]

In Preparation Example 1, composite materials were each prepared by using polyethylene laminated paper as a raw material. Details are described below.

<Example 1>

An aluminum-adhering polyethylene thin film piece (also referred to as Cel-Al-adhering PE thin film piece or PE thin film piece 1) was obtained by stirring polyethylene laminated paper having paper, a polyethylene thin film layer, and an aluminum thin film layer by using a pulper in water to separate paper. This thin film piece was cut into small pieces having various shapes and sizes of about several $cm^2$ to 100 $cm^2$, and was in a wet state by being immersed into water in a step of stripping off the paper portion. The polyethylene constituting this Cel-Al-adhering PE thin film piece is a low density polyethylene.

Next, the Cel-Al-adhering PE thin film piece and broken paper (edge loss) of polyethylene laminated paper (having paper, polyethylene thin film layer, and aluminum thin film layer) were mixed while being pulverized by using a rotary cutter mill (manufactured by Horai Co., Ltd.), and the mixture and an inorganic powder 1 (titanium oxide 1) were mixed at the blend ratio shown in the upper rows of Table 1. This mixture was melt-kneaded by using a kneader to obtain a composite material. In the melt-kneading, 20 parts by mass of water was first added, and 20 parts by mass of water was further added during the kneading. The composite material of Example 1 was thus obtained.

Incidentally, in this Example 1, and later Examples and Comparative Examples, the moisture content of each of the obtained composite materials was less than 1% by mass.

<Example 2>

A cellulose fiber-aluminum-adhering polyethylene thin film piece (also referred to as Cel-Al-adhering PE thin film piece or PE thin film piece 2) was obtained by stripping off and removing, by a pulper, a certain amount of a paper portion from a recovered material of a beverage container formed by using polyethylene laminated paper having paper, a polyethylene thin film layer, and an aluminum thin film layer. This thin film piece was cut into small pieces having various shapes and sizes of about several $cm^2$ to 100 $cm^2$, and was in a wet state by being immersed into water in a step of stripping off the paper portion. The polyethylene constituting this Cel-Al-adhering PE thin film piece is a low density polyethylene.

Next, the Cel-Al-adhering PE thin film piece and an inorganic powder 1 (titanium oxide 1) were mixed at the blend ratio shown in the upper rows of Table 1, and the mixture was melt-kneaded by using a kneader to obtain a composite material. In the melt-kneading, 20 parts by mass of water was first added, and 20 parts by mass of water was further added during the kneading. The composite material of Example 2 was thus obtained.

<Comparative Example 1>

A polyolefin-based waste material plastic 1 (recovered waste plastic (79% by mass of polyethylene, 20% by mass of polypropylene, and 1% by mass of polystyrene)), an inorganic powder 1 (titanium oxide 1), and an inorganic powder 2 (calcium carbonate 1) were mixed at the blend ratio shown in the upper rows of Table 1, and the mixture was melt-kneaded by using a kneader to obtain a composite material.

<Comparative Example 2>

A polyolefin-based waste material plastic 1 (recovered waste plastic (79% by mass of polyethylene, 20% by mass of polypropylene, and 1% by mass of polystyrene)) and an inorganic powder 1 (titanium oxide 1) were mixed at the blend ratio shown in the upper rows of Table 1, and the mixture was melt-kneaded by using a kneader to obtain a composite material.

<Comparative Example 3>

A low density polyethylene 1 (NOVATEC LC600A, manufactured by Japan Polyethylene Corporation) and an inorganic powder 1 (titanium oxide 1) were mixed at the blend ratio shown in the upper rows in Table 1, and the mixture was melt-kneaded by using a kneader to obtain a composite material.

The contents of cellulose fibers in the composite materials are shown in the middle row in Table 1, and the evaluation results and the like are shown in the lower rows in Table 1.

[Table 1]

Table 1

| | Ex. 1 | Ex. 2 | CEx. 1 | CEx. 2 | CEx. 3 |
|---|---|---|---|---|---|
| PE thin film piece 1 (parts by mass) | 70 | | | | |
| PE thin film piece 2 (parts by mass) | | 100 | | | |
| Broken paper of PE laminated paper (parts by mass) | 30 | | | | |
| Waste plastic 1 (parts by mass) | | | 100 | 100 | |
| Low density polyethylene 1 (parts by mass) | | | | | 100 |
| Inorganic powder 1 (parts by mass) | 5 | 5 | 5 | 5 | 5 |
| Inorganic powder 2 (parts by mass) | | | 55 | | |
| Cellulose fiber (% by mass) | 15.6 | 16.7 | - | - | - |
| Specific gravity (g/cm$^3$) | 1.11 | 1.13 | 1.30 | 1.01 | 0.95 |
| Impact strength (kJ/m$^2$) | 7.5 | 7.0 | 2.5 | 3.6 | NB |
| Tensile strength (MPa) | 25.3 | 25.1 | 11.7 | 18.1 | 16.1 |
| Flexural strength (MPa) | 26.7 | 26.1 | 14.8 | 20.3 | 6.8 |
| Flexural modulus (MPa) | 1365 | 1323 | 1332 | 802 | 182 |
| Cellulose fiber length | ⊙ | ⊙ | - | - | - |
| Aggregate 1 | Present | Present | - | - | - |
| NB: Not broken  Remarks: 'Ex.' means Example according to this invention, and 'CEx.' means Comparative Example. | | | | | |

The composite materials of Examples 1 and 2 were both excellent in impact strength, tensile strength, and flexural strength. The composite material of Comparative Example 1, in which a cellulose fiber is not contained and an inorganic material is blended in a large amount of 60 parts by mass in total, had high flexural modulus, but had poor impact strength, tensile strength, and flexural strength, and high specific gravity. The composite material of Comparative Example 3 which does not contain a cellulose fiber was significantly inferior in tensile strength, flexural strength, and flexural modulus compared to the composite materials of Examples 1 and 2 which similarly do not contain an inorganic powder and contain a cellulose fiber. The composite material of Comparative Example 2, in which a waste plastic 1 is used as a resin and a cellulose fiber is not contained, was also inferior in tensile strength, flexural strength, flexural modulus, and impact strength compared to the composite materials of Examples 1 and 2.

Further, when the composite material of Example 1 was formed into a trough (groove type) by injection molding, there was no problem in the molding process. The appearance of the obtained trough was good since the gloss was suppressed as a whole and the surface uniformity was high. On the other hand, in the trough using the composite material of Comparative Example 1, the glossiness of the appearance was different at a portion of the surface, and the appearance was poor.

[Preparation Example 2]

In Preparation Example 2, composite materials were each prepared by using a low density polyethylene as a resin and pulp as a cellulose material. Details are described below.

<Example 3>

In Example 3, a low density polyethylene 1 (NOVATEC LC600A, manufactured by Japan Polyethylene Corporation) and a pulp 1 (VITACEL L500, manufactured by J. RETTENMAIER & SOHNE) were mixed at the blend ratio shown in the upper rows of Table 2 (unit: parts by mass), and the mixture was melt-kneaded by using a kneader to obtain a composite material. In the melt-kneading, 20 parts by mass of water was first added, and 20 parts by mass of water was further added during the kneading. The composite material of Example 3 was thus obtained.

<Example 4>

A low density polyethylene 1 (NOVATEC LC600A, manufactured by Japan Polyethylene Corporation) and a pulp 1 (VITACEL L500, manufactured by J. RETTENMAIER & SÖHNE) were mixed at the blend ratio shown in the upper rows of Table 1 (unit: parts by mass), and the mixture was melt-kneaded by using a kneader to obtain a composite material. The composite material of Example 4 was thus obtained.

<Example 5>

In Example 5, a low density polyethylene 1 (NOVATEC LC600A, manufactured by Japan Polyethylene Corporation) and a pulp 2 (ARBOCEL BE600/30, manufactured by J. RETTENMAIER & SOHNE) were mixed at the blend ratio shown in the upper rows of Table 2 (unit: parts by mass), and the mixture was melt-kneaded by using a kneader to obtain a composite material. In the melt-kneading, 20 parts by mass of water was first added, and 20 parts by mass of water was further added during the kneading. The composite material of Example 5 was thus obtained.

<Comparative Example 4>

A low density polyethylene 1 (NOVATEC LC600A, manufactured by Japan Polyethylene Corporation) was used as Comparative Example 4.
The contents of cellulose fibers in the composite materials are shown in the middle row in Table 2, and the evaluation results and the like are shown in the lower rows in Table 2.
The presence of each of the aggregates 1, 1b, 1c, and 1d was evaluated by using a sheet formed of a material prepared by mixing the obtained composite material and a low density polyethylene 1 at a mass ratio of 6 : 44 (composite material: low density polyethylene 1) to dilute the composite material with the resin. Note that the content of the cellulose fiber of the sheet obtained by dilution was 3.6 to 3.8% by mass. A range of 7 mm in length $\times$ 8 mm in width of the sheet was taken as one position, the areas of randomly selected five positions were determined as the observation area.

[Table 2]

Table 2

| | Ex. 3 | Ex. 4 | Ex. 5 | CEx. 4 |
|---|---|---|---|---|
| Low density polyethylene 1 (parts by mass) | 60 | 60 | 60 | 100 |
| Pulp 1 (parts by mass) | 40 | 40 | | - |
| Pulp 2 (parts by mass) | | | 40 | |
| Cellulose fiber (% by mass) | 29.9 | 31.9 | 26.9 | - |
| Specific gravity (g/cm$^3$) | 1.07 | 1.07 | 1.07 | 0.92 |
| Impact strength (kJ/m$^2$) | 7.0 | 5.1 | 4.6 | NB |
| Tensile strength (MPa) | 18.7 | 18.9 | 12.1 | 16.4 |

(continued)

|  | Ex. 3 | Ex. 4 | Ex. 5 | CEx. 4 |
|---|---|---|---|---|
| Flexural strength (MPa) | 21.3 | 20.9 | 12.7 | 6.6 |
| Flexural modulus (MPa) | 1071 | 1083 | 450 | 133 |
| Cellulose fiber length | ⊙ | ⊙ | ○ | - |
| Length weighted average fiber length ($\mu$m) | 603 | 578 | 295 | - |
| Aggregate 1 | Present | None | Present | - |
| Aggregate 2 | None | None | None | - |
| Aggregate 1b | Present | None | Present | - |
| Aggregate 1c | Present | None | Present | - |
| Aggregate 1d | Present | None | Present | - |
| NB: Not broken  Remarks: 'Ex.' means Example according to this invention, and 'CEx.' means Comparative Example. | | | | |

The composite materials of Examples 3 and 4 were both excellent in impact strength. In particular, the impact strength of the composite material of Example 3 which contains a cellulose fiber aggregate having an area of $2.0 \times 10^4$ to $1.0 \times 10^6$ $\mu$m$^2$ was remarkably increased as compared with the composite material of Example 4 which does not contain the aggregate. Meanwhile, the composite material of Example 5, which is relatively inferior in impact strength, tensile strength, flexural strength, and flexural modulus, contains a cellulose fiber having a fiber length of 0.3 mm or more, but does not contain a cellulose fiber having a fiber length of 1 mm or more, and the length weighted average fiber length thereof was less than 0.3 mm.

[Preparation Example 3]

In Preparation Example 3, composite materials were each prepared by using broken paper of laminated paper in place of the pulp of Preparation Example 2. Details are described below.

<Example 6>

A material obtained by pulverizing broken paper of polyethylene laminated paper (having paper, a polyethylene thin film layer, and an aluminum thin film layer) by using a rotary cutter mill (manufactured by Horai Co., Ltd.) and a low density polyethylene 1 (NOVATEC LC600A, manufactured by Japan Polyethylene Corporation) were mixed at the blend ratio shown in the upper rows in Table 3 and melt-kneaded by using a kneader to obtain a composite material. In the melt-kneading, 20 parts by mass of water was first added, and 20 parts by mass of water was further added during the kneading. The cellulose fiber-dispersing resin composite material of Example 6 was thus obtained.

<Example 7>

A material obtained by pulverizing broken paper of polyethylene laminated paper (having paper, a polyethylene thin film layer, and an aluminum thin film layer) by using a rotary cutter mill (manufactured by Horai Co., Ltd.) and a low density polyethylene 1 (NOVATEC LC600A, manufactured by Japan Polyethylene Corporation) were mixed at the blend ratio shown in the upper rows in Table 3 and melt-kneaded by using a kneader without adding water to obtain a composite material. The cellulose fiber-dispersing resin composite material of Example 7 was thus obtained.

The contents of cellulose fibers in the composite materials are shown in the middle row in Table 3, and the evaluation results and the like are shown in the lower rows in Table 3.

The presence of each of the aggregates 1, 1b, 1c, and 1d was evaluated by using a sheet formed of a material prepared by mixing the obtained composite material and a low density polyethylene 1 at a mass ratio of 8 : 42 (composite material: low density polyethylene 1) to dilute the composite material with the resin. Note that the cellulose fiber amount in the sheet obtained by dilution was 3.1% by mass. A range of 7 mm in length x 8 mm in width of the sheet was taken as one position, the areas of randomly selected five positions were determined as the observation area.

The proportion of the sum of the areas of the aggregates having an area of $3.0 \times 10^4$ to $1.3 \times 10^5$ $\mu$m$^2$ (area range r1) in the observation area is taken as s1, and the proportion of the sum of the areas of the aggregates having an area of $1.0 \times 10^3$ to $1.0 \times 10^6$ $\mu m^2$ (area range r2) in the observation area is taken as s2, and s1 and s2 are shown in Table 2. The proportion of s1 in s2 is also shown in Table 3.

In the following table, (s1/s2) x 100 means the proportion of the sum of the areas of the aggregates having an area of $3.0 \times 10^4$ to $1.3 \times 10^5$ $\mu m^2$ in the sum of the areas of the aggregates having an area of $1.0 \times 10^3$ to $1.0 \times 10^6$ $\mu m^2$ in a plan view in the aggregates of the cellulose fiber contained in the composite material".

Incidentally, aluminum derived from broken paper is also observed as a dark color with transmitted light. However, with transmitted light, lightness is higher in the aggregate of the cellulose fiber than aluminum, and therefore the aggregate of the cellulose fiber can be discriminated.

The composite materials of Examples 6 and 7 were both excellent in impact strength. Comparing Examples 6 and 7, impact strength was more excellent in the composite material of Example 6 which does not contain an aggregate 2. Further, in the composite material of Example 7, materials broken by a runner tend to remain on the molding machine side during injection molding, whereas the composite material of Example 6 did not cause such a problem, and was excellent in formability.

[Table 3]

Table 3

|  | Example 6 | Example 7 |
|---|---|---|
| Low density polyethylene 1 (parts by mass) | 60 | 60 |
| Broken paper of laminated paper (parts by mass) | 40 | 40 |
| Cellulose fiber (% by mass) | 19.4 | 19.5 |
| Impact strength (kJ/m$^2$) | 12.1 | 9.5 |
| Tensile strength (MPa) | 24.2 | 22.5 |
| Flexural strength (MPa) | 22.8 | 23.8 |
| Flexural modulus (MPa) | 929 | 953 |
| Aggregate 1 | Present | Present |
| Aggregate 2 | None | Present |
| s1 (%) | 0.34 | - |
| s2(%) | 1.62 | - |
| (s1/s2)×100 (%) | 21 | - |
| Aggregate 1b | Present | Present |
| Aggregate 1c | Present | Present |
| Aggregate 1d | Present | Present |

The present invention has been described as related to the present embodiments. It is our intention that the invention not be limited by any of the details of the description unless otherwise specified, but rather be construed broadly within its spirit and scope as set out in the attached claims.

The present application claims priority on Patent Application No. 2019-098910 filed in Japan on May 27, 2019, which is herein incorporated by reference as a part of the present specification.

**Claims**

1. A resin composite material, comprising a cellulose fiber dispersed in a thermoplastic resin.

2. The resin composite material according to claim 1, which is used as a material for forming a trough.

3. The resin composite material according to claim 1 or 2, wherein the thermoplastic resin contains a polyolefin resin.

4. The resin composite material according to claim 3, wherein the polyolefin resin contains a polyethylene resin.

5. The resin composite material according to any one of claims 1 to 4,

   wherein a content of the cellulose fiber in the resin composite material determined by the following measurement method is 1% by mass or more and less than 70% by mass:
   <measurement method>
   a sample of a cellulose fiber-dispersing resin composite material is subjected to a thermogravimetric analysis (TGA) under a nitrogen atmosphere at a heating rate of +10°C/min, and the content of the cellulose fiber is calculated by the following [Formula 1]:

   [Formula 1] (content of cellulose fiber [% by mass]) = (amount of mass reduction of sample at 200 to 380°C [mg]) × 100/(mass of sample before thermogravimetric analysis [mg]).

6. The resin composite material according to claim 5, wherein the content of the cellulose fiber in the resin composite material is 3% by mass or more and less than 50% by mass.

7. The resin composite material according to any one of claims 1 to 6, wherein the cellulose fiber contains a cellulose fiber having a fiber length of 0.3 mm or more.

8. The resin composite material according to any one of claims 1 to 7, wherein at least a part of the cellulose fiber is contained as aggregates of cellulose fibers.

9. The resin composite material according to claim 8, wherein at least a part of the aggregates is an aggregate having an area of $2.0 \times 10^4$ to $1.0 \times 10^6$ $\mu m^2$ in a plan view.

10. The resin composite material according to claim 8 or 9, wherein at least a part of the aggregates is an aggregate having an area of $2.0 \times 10^4$ to $2.0 \times 10^5$ $\mu m^2$ in a plan view.

11. The resin composite material according to any one of claims 1 to 10, comprising aluminum dispersed.

12. The resin composite material according to any one of claims 1 to 11, comprising at least one kind of titanium oxide, carbon black, and a photostabilizer.

13. The resin composite material according to any one of claims 1 to 12, which has a linear expansion coefficient at 10 to 40°C of $1 \times 10^{-4}$/°C or less.

14. A formed body, which is obtainable by forming the resin composite material according to any one of claims 1 to 13.

15. The formed body according to claim 14, which is a trough.

16. The trough according to claim 15, which is used for storing an electrical wire and/or a cable.

17. The trough according to claim 15 or 16, which is a groove type trough, a lid that closes an opening of a groove type trough, or a combination of a groove type trough and a lid that closes an opening of the groove type trough.

## INTERNATIONAL SEARCH REPORT

| International application No. |
| --- |
| PCT/JP2020/020736 |

### A. CLASSIFICATION OF SUBJECT MATTER

C08L 101/00(2006.01)i; C08K 3/04(2006.01)i; C08K 3/08(2006.01)i; C08K 3/22(2006.01)i; C08L 1/02(2006.01)i; C08L 23/04(2006.01)i; C08L 97/02(2006.01)i; H02G 9/04(2006.01)i

FI:     C08L101/00; C08L1/02; C08L97/02; C08K3/08; C08K3/22; C08K3/04; H02G9/04; C08L23/04 ZAB

According to International Patent Classification (IPC) or to both national classification and IPC

### B. FIELDS SEARCHED

Minimum documentation searched (classification system followed by classification symbols)
C08L1/00-101/14; C08K3/00-13/08; H02G9/00-9/12

Documentation searched other than minimum documentation to the extent that such documents are included in the fields searched

| | |
| --- | --- |
| Published examined utility model applications of Japan | 1922–1996 |
| Published unexamined utility model applications of Japan | 1971–2020 |
| Registered utility model specifications of Japan | 1996–2020 |
| Published registered utility model applications of Japan | 1994–2020 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>Y | WO 2019/039571 A1 (FURUKAWA ELECTRIC CO., LTD.) 28.02.2019 (2019-02-28) claims 1-4, paragraphs [0017]-[0018], [0028]-[0029], [0051], [0065]-[0067], table 2, example 6 | 1, 3-14<br>2, 15-17 |
| X<br>A | JP 2015-209439 A (OJI HOLDINGS CORPORATION) 24.11.2015 (2015-11-24) claims 1, 5, paragraphs [0011], [0022]-[0023], [0041]-[0049], table 1, example 1 | 1, 3-10, 13-14<br>2, 11-12, 15-17 |
| X<br>A | JP 2012-167202 A (OLYMPUS CORP.) 06.09.2012 (2012-09-06) claims 1, 8, paragraphs [0016], [0034]-[0037], [0043]-[0045], [0050], [0063], table 1, example 1 | 1, 3-14<br>2, 15-17 |

☒ Further documents are listed in the continuation of Box C.     ☒ See patent family annex.

| | |
| --- | --- |
| *   Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| 27 July 2020 (27.07.2020) | 11 August 2020 (11.08.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
| --- | --- |

Form PCT/ISA/210 (second sheet) (January 2015)

**INTERNATIONAL SEARCH REPORT**

| International application No. |
|---|
| PCT/JP2020/020736 |

C (Continuation).   DOCUMENTS CONSIDERED TO BE RELEVANT

| Category* | Citation of document, with indication, where appropriate, of the relevant passages | Relevant to claim No. |
|---|---|---|
| X<br>A | JP 2018-502997 A (FEDERAL-MOGUL POWERTRAIN LLC) 01.02.2018 (2018-02-01) claims 1, 5, paragraphs [0003], [0033]-[0034] | 1-7, 13-15, 17<br>8-12, 16 |
| Y<br>A | JP 2008-063558 A (FURUKAWA ELECTRIC CO., LTD.) 21.03.2008 (2008-03-21) claims 1-8, paragraphs [0002]-[0003], [0023]-[0025] | 2, 15-17<br>1, 3-14 |

Form PCT/ISA/210 (continuation of second sheet) (January 2015)

**INTERNATIONAL SEARCH REPORT**
Information on patent family members

International application No.

PCT/JP2020/020736

| Patent Documents referred in the Report | Publication Date | Patent Family | Publication Date |
|---|---|---|---|
| WO 2019/039571 A1 | 28 Feb. 2019 | (Family: none) | |
| JP 2015-209439 A | 24 Nov. 2015 | (Family: none) | |
| JP 2012-167202 A | 06 Sep. 2012 | (Family: none) | |
| JP 2018-502997 A | 01 Feb. 2018 | US 2017/0232689 A1 claims 1, 5, paragraphs [0005], [0049]-[0050] US 2016/0082904 A1 WO 2016/044826 A1 EP 3194137 B1 KR 10-2017-0058387 A CN 107073840 A | |
| JP 2008-063558 A | 21 Mar. 2008 | (Family: none) | |

Form PCT/ISA/210 (patent family annex) (January 2015)

**EP 3 978 571 A1**

**Patent documents cited in the description**

- JP 2008063558 A
- JP 2019098910 A